(19) **Europäisches Patentamt**
**European Patent Office**
**Office européen des brevets**

(11) Veröffentlichungsnummer: **0 603 573 A2**

(12) **EUROPÄISCHE PATENTANMELDUNG**

(21) Anmeldenummer: **93118957.5**

(22) Anmeldetag: **25.11.93**

(51) Int. Cl.5: **C08F 263/02**, C08F 255/02, C10L 1/22, //(C08F255/02, 222:36)

(30) Priorität: **12.12.92 DE 4241948**

(43) Veröffentlichungstag der Anmeldung: **29.06.94 Patentblatt 94/26**

(84) Benannte Vertragsstaaten: **AT BE CH DE DK ES FR GB IT LI NL SE**

(71) Anmelder: **HOECHST AKTIENGESELLSCHAFT Postfach 80 03 20 D-65926 Frankfurt(DE)**

(72) Erfinder: **Reimann, Werner, Dr. Dipl.-Chem. Elsenbruch 3 B D-46147 Oberhausen(DE)**
Erfinder: **Krull, Matthias, Dr. Dipl.-Chem. Erlenweg 5 D-65812 Bad Soden(DE)**
Erfinder: **Feustel, Michael, Dr. Dipl.-Chem. Freiherr von Stein Strasse 35 D-65779 Kelkheim(DE)**
Erfinder: **Balzer, Juliane Im Trutz 51 D-60322 Frankfurt(DE)**

(54) **Pfropfpolymerisate, ihre Herstellung und Verwendung als Stockpunkferniedriger und Fliessverbesserer für Rohöle, Rückstandsöle und Mitteldestillate.**

(57) Es werden Pfropfpolymerisate beschrieben, die aus 20 bis 99,9 Gew.-% eines Ethylenmischpolymerisats (Basispolymerisat) und aus 0,1 bis 80 Gew.-% einer Pfropfkomponente bestehen. Das Basispolymerisat enthält 30 bis 95 Gew.-% Ethylen und 5 bis 70 Gew.-% Vinylester gesättigter aliphatischer $C_2$- bis $C_{18}$-Monocarbonsäuren oder 4 bis 50 Gew.-% Vinylester gesättigter aliphatischer $C_2$- bis $C_{18}$-Monocarbonsäuren und 1 bis 20 Gew.-% lineare oder verzweigte $C_3$- bis $C_{18}$-Monoolefine. Pfropfkomponenten sind N-substituierte alpha,beta-ungesättigte Dicarbonsäureimide und/oder Dicarbonsäureamide und/oder Dicarbonsäurehalbamide und/oder Ammoniumsalze der Halbamide. Die Pfropfpolymerisate werden zur Verbesserung der Fließfähigkeit paraffinhaltiger Mineralöle und Mineralöldestillate eingesetzt.

EP 0 603 573 A2

Die Erfindung betrifft Pfropfpolymerisate aus Ethylenmischpolymerisaten als Basispolymerisaten und N-substituierten, alpha,beta-ungesättigten Dicarbonsäureimiden und/oder N-substituierten, alpha,beta-ungesättigten Dicarbonsäureamiden und/oder N-substituierten, alpha,betaungesättigten Dicarbonsäurehalbamiden und/oder Ammoniumsalzen der Halbamide als Pfropfkomponenten, die Herstellung der Pfropfpolymerisate und ihre Verwendung als Stockpunkterniedriger (Pour-Point-Erniedriger) und Fließverbesserer für Rohöle, Rückstandsöle und Mitteldestillate wie Dieselkraftstoff und Heizöl EL.

Rohöle, Rückstandsöle und Mitteldestillate enthalten je nach Herkunft und Herstellungsart n-Paraffine in unterschiedlichen Mengen. Niedrige Temperaturen vermindern die Löslichkeit dieser Paraffine, sie scheiden sich als plättchenförmige Kristalle ab, die agglomerieren und wabenartig ineinanderwachsen können, teilweise unter Einschluß von Öl. Hierdurch wird die Fließfähigkeit der Rohöle und Rohölprodukte erheblich verschlechtert, so daß Störungen bei ihrer Förderung, ihrem Transport, ihrer Lagerung und ihrem Einsatz auftreten können.

Eine wichtige anwendungstechnische Kenngröße zur Charakterisierung des Fließ- und Kälteverhaltens von Roh- und Rückstandsölen ist der Pour Point (abgekürzt PP; bestimmt nach DIN 51597). Das Fließ- und Kälteverhalten von Mitteldestillaten wird durch den Cold Filter Plugging Point (abgekürzt CFPP; bestimmt nach DIN 51428) beschrieben. Beide Kenngrößen werden in °C gemessen.

Es ist bekannt, Mineralölen zur Verbesserung ihres Kälteverhaltens Additive zuzusetzen, die Größe und Form der Paraffinkristalle verändern, so daß die Öle auch bei tiefen Temperaturen fließfähig und filtrierbar bleiben. Roh- und Rückstandsöle werden mit Pour-Point-Erniedrigern zur Herabsetzung des PP und Mitteldestillate mit Fließverbesserern zur Erniedrigung des CFPP versetzt. Große Bedeutung als Pour-Point-Erniedriger und Fließverbesserer haben öllösliche Mischpolymerisate des Ethylens mit weiteren Monomeren erlangt.

So setzt man nach der DE-B-11 47 799 Erdöldestillat-Treibstoff- bzw. Brennstoffgemischen mit einem Siedebereich zwischen etwa 120 und 400°C öllösliche Mischpolymerisate aus Ethylen und Vinylacetat mit einem Molekulargewicht zwischen etwa 1.000 und 3.000 zu. Als besonders geeignet haben sich Mischpolymerisate erwiesen, die etwa 60 bis 99 Gew.-% Ethylen und etwa 1 bis 40 Gew.-% Vinylacetat enthalten.

Aus der DE-A-32 47 753 ist die Verwendung von Terpolymerisaten aus mindestens 60 Gew.-% Ethylen-Einheiten, 1 bis 40 Gew.-% Alkencarbonsäurester- und/oder Vinylester-Einheiten und 1 bis 30 Gew.-% Vinylketon-Einheiten mit einem Molekulargewicht von 500 bis 20.000 als Additive für Rohöle und Mitteldestillate bekannt.

In der US-A-4 015 063 werden als Additive für Roh- und Rückstandsöle Terpolymerisate des Ethylens mit einem durchschnittlichen Molekulargewicht von 500 bis 10.000 g/mol beschrieben. Sie enthalten neben 45 bis 80 Gew.-% Ethylen 10 bis 30 Gew.-% eines Dialkylvinylcarbinols und 10 bis 25 Gew.-% eines Fettsäurevinylesters mit bis zu 8 C-Atomen.

Des weiteren ist aus der EP-B-02 03 554 die Verwendung von Terpolymerisaten mit einer mittleren Molmasse von 500 bis 10.000 g/mol, die neben Ethylen 0,5 bis 20 Gew.-% Diisobutylen und 20 bis 35 Gew.-% Vinylacetat enthalten, als Additive für Mineralöle und Mineralöldestillate bekannt.

Die EP-A-03 09 897 beschreibt Copolymerisate aus 95 bis 50 Gew.-% Ethylen und 5 bis 50 Gew.-% Methoxyessigsäurevinylester mit einer mittleren Molmasse von 500 bis 10.000 g.mol$^{-1}$ und deren Verwendung als Fließverbesserer für Mitteldestillate.

Gegenstand der DE-A-40 42 206 sind Terpolymerisate, die neben Ethylen 5 bis 35 Gew.-% Vinylacetat und 1 bis 25 Gew.% Neononansäurevinylester oder Neodecansäurevinylester enthalten und eine mittlere Molmasse von 500 bis 5.000 g.mol$^{-1}$ besitzen. Sie werden als Fließverbesserer insbesondere für Mitteldestillate verwendet.

Aus der DE-A-37 25 059 sind polymere Fließverbesserer für Mitteldestillate auf der Basis von Pfropfpolymerisaten bekannt, die aus 20 bis 80 Gew.% Methacrylsäureestern von $C_8$- bis $C_{15}$-Alkanolen und 80 bis 20 Gew.% Ethylen-Vinylacetat-Copolymeren mit einem Verzweigungsgrad von 3 bis 15 $CH_3$-Gruppen pro 100 $CH_2$-Gruppen bestehen.

Ein Nachteil der bekannten Pour-Point-Erniedriger und Fließverbesserer ist ihre noch nicht ausreichende Wirksamkeit in Mineralölen und Mineralöldestillaten bestimmter Provenienz und/oder Herstellungsart, z.B. in Mitteldestillaten mit Siedeenden oberhalb 380°C, deren Cloud Point nicht selten deutlich oberhalb 0°C liegt. Außerdem kann die Verwendung von konventionellen Fließverbesserern zu einer Beeinträchtigung der Filtrierbarkeit von Mineralöldestillaten oberhalb des Cloud Points führen.

Es bestand daher die Aufgabe, neue Additive zur Verbesserung der Fließfähigkeit solcher Mineralöle und Mineralöldestillate zu entwickeln, bei denen die Additive des Standes der Technik wenig oder gar nicht wirksam sind. Sie sollen zudem eine ausreichende Filtrierbarkeit von Mineralöldestillaten oberhalb des Cloud Point gewährleisten und ohne Probleme anwendbar sein.

Diese Aufgabe wird gelöst durch Pfropfpolymerisate, die aus 20 bis 99,9 Gew.-% eines Ethylenmischpolymerisats und 0,1 bis 80 Gew.-% einer Pfropfkomponente bestehen, wobei das Ethylenmischpolymerisat 30 bis 95 Gew.-% Ethylen und 5 bis 70 Gew.-% Vinylester gesättigter, aliphatischer $C_2$- bis $C_{18}$- Monocarbonsäuren oder 4 bis 50 Gew.-% Vinylester gesättigter aliphatischer $C_2$- bis $C_{18}$-Monocarbonsäurenund 1 bis 20 Gew.-% lineare oder verzweigte $C_3$-bis $C_{18}$-Monoolefine enthält und die Pfropfkomponente N-substituierte alpha,beta-ungesättigte Dicarbonsäureimide und/oder Dicarbonsäureamide und/oder Dicarbonsäurehalbamide und/oder Ammoniumsalze der Halbamide sind.

Überraschenderweise verbessern die neuen Pfropfpolymerisate besonders wirksam den Pour Point von Rohölen und Rückstandsölen und den Cold Filter Plugging Point von Mitteldestillaten. Dabei ist hervorzuheben, daß sie in Mineralölen oder Mineralölprodukten hervorragend löslich sind und ihr Zusatz die Filtrierbarkeit von Mineralöldestillaten oberhalb des Gold Filter Plugging Points nicht beeinträchtigen.

Als Fließverbesserer besonders geeignet sind Pfropfpolymerisate, die 50 bis 99 Gew.-% Ethylenmischpolymerisat (im folgenden auch als Basispolymerisat bezeichnet) und 1 bis 50 Gew.-% der Pfropfkomponente enthalten.

Bewährt haben sich ferner Pfropfpolymerisate, deren Basispolymerisat 50 bis 80 Gew.-% Ethylen und 20 bis 50 Gew.-% Vinylester gesättigter, aliphatischer $C_2$- bis $C_{18}$-Monocarbonsäuren enthalten. Sofern ein Teil der Vinylester durch Olefine ersetzt ist, werden Ethylenmischpolymerisate bevorzugt, die 50 bis 80 Gew.-% Ethylen, 15 bis 35 Gew.-% Vinylester gesättigter aliphatischer $C_2$- bis $C_{18}$-Monocarbonsäuren und 5 bis 15 Gew.-% lineare oder verzweigte $C_3$- bis $C_{18}$-Monoolefine enthalten.

Als Bestandteil der Basispolymerisate geeignet sind insbesondere Ester des Vinylalkohols mit aliphatischen $C_1$-bis $C_{18}$-Monocarbonsäuren, z.B. Essigsäure, Propionsäure, Buttersäure, Isononansäure, Laurinsäure, Stearinsäure, insbesondere mit Essigsäure sowie $C_5$- bis $C_{10}$-Neocarbonsäuren. Unter der Bezeichnung Neocarbonsäuren (auch unter dem Namen Versaticsäuren im Handel) versteht man gesättigte Monocarbonsäuren mit einer tertiären Carboxylgruppe. Sie werden durch Kochsynthese hergestellt, die Vinylester erhält man aus ihnen durch Umsetzung mit Acetylen. Die Vinylester können als Einzelverbindungen oder als Gemisch unterschiedlicher Verbindungen eingesetzt werden.

Als lineare oder verzweigte Monoolefine haben sich alpha-Olefine mit 6 bis 18 Kohlenstoffatomen im Molekül insbesondere Diisobutylen bewährt. Auch die Olefine können als Einzelverbindungen oder als Gemisch eingesetzt werden.

Unabhängig von der Anzahl im Polymerisat enthaltener unterschiedlicher Vinylester werden Basispolymerisate, die lediglich Ethylen und Vinylester als Comonomere enthalten, im Rahmen der vorliegenden Erfindung als Copolymerisate bezeichnet. Ethylenmischpolymerisate, die neben Ethylen zwei strukturell unterschiedliche Monomere, nämlich einen oder mehrere Vinylester und ein oder mehrere alpha-Olefine enthalten, werden, unabhängig von der Anzahl der Comonomeren im Molekül, im folgenden als Terpolymerisate bezeichnet.

Besonders geeignete Basispolymerisate sind unter den Copolymerisaten Ethylen-/Vinylacetat-Copolymerisate mit einem Vinylacetatgehalt von 5 bis 50 Gew.-%, vorzugsweise 20 bis 40 Gew.-%. Bevorzugt sind weiterhin Terpolymerisate aus Ethylen, 5 bis 50 Gew.-%, vorzugsweise 20 bis 35 Gew.-% Vinylacetat und 1 bis 20 Gew.-%, vorzugsweise 5 bis 15 Gew.-% des Vinylesters einer $C_5$- bis $C_{10}$-Neocarbonsäure und/oder Diisobutylen.

Die Basispolymerisate besitzen eine mittlere Molekularmasse ($M_n$) von 500 bis 30.000 g/mol. Als PourPoint-Erniedriger werden Pfropfpolymerisate aus Basispolymerisaten mit einer mittleren Molekularmasse von 8.000 bis 30.000 g/mol, als Fließverbesserer Propfpolymerisate aus Basispolymerisaten mit einer mittleren Molekularmasse von 1.000 bis 10.000 g/mol bevorzugt. Die genannten mittleren Molekularmassen sind durch Gelpermeationschromatographie (mit Polystyrol-Eichung) bestimmt worden. Eine Beschreibung des Bestimmungsverfahrens findet sich z.B. in Ullmanns Encyclopädie der technischen Chemie, 4. Auflage (1978), Band 15, Seite 389 ff.

Als Fließverbesserer besonders geeignete Pfropfpolymerisate haben bei 140°C eine Schmelzviskosität von 50 bis 500 mPa . s (gemessen mit einem Platte-Kegel-Rotationsviskosimeter Modell PK 100 der Fa. Haake). Der Schmelzindex (nach DIN 53 735) der vorzugsweise als Pour-Point-Erniedriger eingesetzten Pfropfpolymerisate beträgt 50 bis 5.000 g/10 min, gemessen bei 190°C und einem Auflagegewicht von 2,16 kg ($MFI_{190/2,16}$).

Die Basispolymerisate werden aus den Monomeren nach bekannten Verfahren in Gegenwart von Radikalinitiatoren wie Sauerstoff, Peroxiden, Hydroperoxiden oder Azoverbindungen und Molekularmassenreglern wie Kohlenwasserstoffen, Aldehyden oder Ketonen in Autoklaven oder Rohrreaktoren polymerisiert (vgl. hierzu z.B. Ullmanns Encyclopädie der technischen Chemie, 4. Auflage, Bd. 19, Seiten 169 bis 178). Die Herstellung kann in geeigneten inerten organischen Lösungsmitteln als Reaktionsmedium durchgeführt werden. Vorteilhaft erfolgt die Polymerisation in Masse bei Drücken zwischen 150 bis 300 MPa und Temperaturen zwischen 120 und 325°C ohne Verwendung von Lösungsmitteln als Reaktionsmedium, gegebenenfalls jedoch als Hilfsmittel in sehr geringen Mengen zum Dosieren von Initiator und Molekularmassenregler.

Als Pfropfkomponenten werden erfindungsgemäß N-substituierte alpha,beta-ungesättigte Dicarbonsäureimide, -diamide und/oder -halbamide und/oder Ammoniumsalze der Halbamide verwendet. Zu ihrer Herstellung setzt man alpha,beta-ungesättigte Dicarbonsäuren oder Dicarbonsäureanhydride mit einem Amin um. Die Reaktion kann in einem aliphatischen oder einem aromatischen Lösungsmittel durchgeführt werden. Beispiele für aliphatische Lösungsmittel sind Hexan, Heptan, Cyclohexan oder Kerosin, d.h. ein Gemisch höherer aliphatischer Kohlenwasserstoffe. Geeignete aromatische Lösungsmittel sind z.B. Toluol, Xylol oder Gemische aromatischer Kohlenwasserstoffe. Der Zusatz eines sauren Katalysators wie p-Toluolsulfonsäure und die kontinuierliche Abtrennung des bei der Umsetzung gebildeten Wassers hat sich ebenso bewährt, wie die Einhaltung von Reaktionstemperaturen zwischen 100 bis 180°C. Der Fortgang der Reaktion kann durch Messung der Säurezahl oder IR-spektroskopisch überwacht werden.

Als alpha,beta-ungesättigte Dicarbonsäuren oder Dicarbonsäureanhydrid haben sich insbesondere Maleinsäure, Fumarsäure und vorzugsweise Maleinsäureanhydrid bewährt. Für die Herstellung der N-substituierten alpha,beta-ungesättigten Dicarbonsäureimide, -diamide und -halbamide oder von Ammoniumsalze der Halbamide verwendet man primäre und/oder sekundäre Amine der allgemeinen Formel $H_2NR^1$ bzw. $HNR^1R^2$, wobei $R^1$, $R^2$ für gleiche oder verschiedene Alkyl-, Cycloalkyl-, Aryl-, oder Arylalkylreste steht. Bevorzugt werden $C_4$- bis $C_{20}$-Monoalkylamine und/oder Benzylamin eingesetzt.

Die Herstellung der erfindungsgemäßen Pfropfpolymerisate erfolgt nach an sich bekannten Verfahren, vgl. hierzu z.B. Houben-Weyl, Methoden der organischen Chemie, Bd. 14/1, S. 110 ff. Besonders bewährt hat sich Basispolymerisat und Pfropfkomponente in Gegenwart eines Radikalinitiators bei Temperaturen von 30 bis 200°C unter einem Schutzgas wie Argon, Stickstoff oder Kohlendioxid, umzusetzen. Die Reaktion kann sowohl als Massereaktion in Abwesenheit von Lösungsmitteln als Reaktionsmedium (ausgenommen die geringen Mengen Lösungsmittel zum Dosieren der Initiators), als auch in Gegenwart von Lösungsmitteln durchgeführt werden. Geeignete Lösungsmittel sind aliphatische und aromatische Kohlenwasserstoffe wie Decan, Kerosin, Toluol, Xylol, Ethylbenzol, Cumol, Trimethylbenzol, Dimethylnaphthalin. Ebenso geeignet sind handelsübliche Gemische aliphatischer oder aromatischer Kohlenwasserstoffe mit einem Siedebereich zwischen 150 und 210°C. Daneben kommen als Lösungsmittel auch Benzolderivate wie Chlorbenzol, Dichlorbenzol und Nitrobenzol in Betracht. Als Radikalinitiatoren setzt man die üblicherweise für diesen Zweck verwendeten Verbindungsklassen ein z.B. Peroxide, Hydroperoxide, Ester von Peroxisäuren oder Azoverbindungen. Beispiele sind Di-t-butylperoxid, t-Butylhydroperoxid, Dilauroylperoxid, t-Butylperneodecanoat, t-Butylperoxi-2-ethylhexanoat, t-Butylperoxipivalat und Azo-bis-isobutyronitril. Im allgemeinen werden die Initiatoren in Mengen von 0,1 bis 5 Gew.-% bezogen auf die Reaktanten, zudosiert. Die Reaktionszeit beträgt in Abhängigkeit von der Zerfallsdauer des eingesetzten Radikalinitiators und/oder der Reaktionstemperatur etwa 1 bis 24 Stunden. In untergeordnetem Maße kann aus der Pfropfkomponente auch Homopolymerisat entstehen. Es beeinträchtigt die Eigenschaften des Pfropfpolymerisats nicht und braucht daher nicht abgetrennt zu werden.

Wie bereits ausgeführt wurde, haben sich die neuen Pfropfpolymerisate hervorragend zur Verbesserung der Fließfähigkeit von Mineralölen und Mineralöldestillaten bewährt. Dementsprechend können sie mit gleich gutem Erfolg als Pour-Point-Erniedriger in Roh- und Rückstandsölen und als Fließverbesserer in Mitteldestillaten wie Dieselkraftstoff und Heizöl EL eingesetzt werden.

Die erfindungsgemäßen Pfropfpolymerisate werden Mineralölen und Mineralöldestillaten wie Rohölen, Rückstandsölen oder Mitteldestillaten in Substanz, als Dispersion oder als Lösung zugesetzt. Als Dispersions-/Lösungsmittel geeignet sind aliphatische oder aromatische Kohlenwasserstoffe oder Kohlenwasserstoffgemische wie Benzinfraktionen und insbesondere Kerosin. Die Konzentration der Polymerisate in den Mineralölen oder Mineralöldestillaten beträgt 0,001 bis 2, vorzugsweise 0,005 bis 0,5 Gew.-%, bezogen auf das Mineralöl oder das Mineralöldestillat. Das Pfropfpolymerisat kann allein oder auch zusammen mit anderen Additiven verwendet werden, beispielsweise mit Entwachsungshilfsmitteln, Korrosionsinhibitoren, Antioxidantien oder Schlamminhibitoren. Ebenso ist es möglich, Gemische der erfindungsgemäßen Pfropfpolymerisate einzusetzen, deren Bestandteile sich hinsichtlich ihrer Zusammensetzung und/oder ihrer mittleren Molekularmasse unterscheiden.

Die folgenden Beispiele erläutern die Erfindung ohne sie auf diese speziellen Ausführungsformen zu beschränken.

In den Beispielen wird VA als Abkürzung für Vinylacetat, VEOVA als Abkürzung für $C_9$- und $C_{10}$-Neocarbonsäurevinylester verwendet.

Der Gehalt an Vinylestern der Essigsäure bzw. der Neononansäure oder Neodecansäure wird durch Pyrolyse der Polymerisats bei 450°C in einem geschlossenen System bestimmt. Die Essigsäure als

4

Spaltprodukt des Vinylacetats wird durch mehrmaliges Ausschütteln mit heißem Wasser vom Rückstand getrennt. In den vereinigten Wasserphasen bestimmt man die Essigsäure durch Umsetzung mit NaJ/KJO$_3$-Lösung und Titration des freigesetzten Jods mit Na$_2$S$_2$O$_3$-Lösung. Neononansäure und Neodecansäure werden aus dem Rückstand mehrfach mit Toluol extrahiert und nach Vereinigung der Toluolphasen und Zusatz von 2-Propanol mit einer Lösung von KOH in Ethanol (0,1 mol KOH/l Lösung) titriert.

Der K-Wert, auch als Eigenviskosität bezeichnet, wurde in einem Ubbelohde-Viskosimeter bei 25°C gemessen unter Verwendung einer 5 Gew.-%igen Lösung des Polymerisats in Toluol.

A) Herstellung der Pfropfpolymerisate

Beispiel 1

Zu einer unter Stickstoff auf 100°C erwärmten Lösung von 24 g eines Ethylen-Vinylacetat-Copolymerisats (Polymer 1) und 5 g Stearylmaleinimid in 26 g Kerosin wird über einen Zeitraum von 1 Stunde unter Rühren eine Lösung von 1 g t-Butylperoctoat in 5 g Kerosin getropft. Nach Beendigung der Zugabe läßt man 10 Stunden bei 100°C nachreagieren.

Beispiel 2

24 g eines Ethylen-Vinylacetat-Diisobutylen-Terpolymerisats (Polymerisat 2) werden unter den Bedingungen des Beispiels 1 mit 5 g Stearylimid umgesetzt.

Beispiel 3

Zu einer unter Stickstoff auf 100°C erwärmten Lösung von 29 g eines Ethylen-Vinylacetat-Copolymerisats (Polymerisat 3) und 5,8 g n-Stearylmaleinimid in 26 g Kerosin wird über einen Zeitraum von 1 Stunde unter Rühren eine Lösung von 2 g t-Butylperoctoat getropft. Nach Beendigung der Zugabe läßt man 10 Stunden bei 100°C nachreagieren.

Beispiel 4

Eine Lösung von 95 g eines Ethylen-Vinylacetat-Copolymerisats (Polymerisat 4) und 7,2 g n-Octadecylmaleinimid (70 Gew.-%ig in Toluol) in 56 g Toluol wird unter langsamem Rühren und Durchleiten eines Stickstoffstroms auf 90°C erwärmt und darauf innerhalb von 2 Stunden kontinuierlich mit einer Lösung von 1 g t-Butylperoxy-2-ethylhexanoat in 40 g Toluol versetzt. Anschließend rührt man weitere 2 Stunden bei 90°C nach.

Beispiel 5

Beispiel 4 wird wiederholt jedoch unter Verwendung von 1,4 g n-Dodecylmaleinimid (70 %ig in Toluol) als Pfropfkomponente.

Beispiel 6

Beispiel 4 wird wiederholt jedoch unter Verwendung von 7,2 g n-Dodecylmaleinimid (70 %ig in Toluol) als Pfropfkomponente.

Beispiel 7

Beispiel 4 wird wiederholt jedoch unter Verwendung von 2,9 g n-Dodecylmaleinimid (70 %ig in Toluol) als Pfropfkomponente.

Beispiel 8

142,5 g eines Ethylen-Vinylacetat-Copolymerisats (Polymerisat 4), 7,5 g n-Dodecylmaleinimid und 0,75 g t-Butylperoxy-2-ethylhexanoat werden unter Durchleiten eines Stickstoffstroms 4 Stunden bei 90°C gerührt.

Beispiel 9

Beispiel 8 wird wiederholt jedoch unter Verwendung von 0,75 g Dibenzoylperoxid anstelle von t-Butylperoxy-2-ethylhexanoat als Initiator.

Beispiel 10

Beispiel 8 wird wiederholt jedoch unter Verwendung von 0,75 g Dilauroylperoxid anstelle von t-Butylperoxy-2-ethylhexanoat als Initiator.

Beispiel 11

Beispiel 8 wird wiederholt jedoch unter Verwendung von 0,75 g t-Butylperoxypivalat anstelle von t-Butylperoxy-2-ethylhexanoat als Initiator.

Beispiel 12

Beispiel 8 wird wiederholt jedoch unter Verwendung von t-Butylperneodecanoat anstelle von t-Butylperoxy-2-ethylhexanoat als Initiator.

Beispiel 13

Beispiel 8 wird wiederholt jedoch unter Verwendung von 142,5 g eines Ethylen-Vinylacetat-Vinylneodecanoat-Terpolymerisats als Basispolymerisat.

Die Eigenschaften der in den Beispielen 1 bis 13 verwendeten Basispolymerisate sind in Tabelle 1, die Eigenschaften der Pfropfpolymerisate in Tabelle 2 zusammengestellt.

Tabelle 1

| Kennzeichnung der Basispolymerisate | |
|---|---|
| Polymerisat 1: | Ethylen-Vinylacetat-Copolymerisat (VA-Gehalt: 28,8 Gew.-%; $V_{140}$: 320 mPa.s) |
| Polymerisat 2: | Ethylen-Vinylacetat-Diisobutylen-Terpolymerisat (VA-Gehalt 24,4 Gew.-%; Diisobutylen-Gehalt: 9,8 Gew.-%; $V_{140}$: 345 mPa.s) |
| Polymerisat 3: | Ethylen-Vinylacetat-Copolymerisat (VA-Gehalt 25,8 Gew.-%; $MFI_{180/2,16}$: 637 g/10 min) |
| Polymerisat 4: | Ethylen-Vinylacetat-Copolymerisat (VA-Gehalt 31,2 Gew.-%; $V_{140}$: 110 mPa.s) |
| Polymerisat 5: | Ethylen-Vinylacetat-VinylneononanoatTerpolymerisat (VA-Gehalt: 28,8; Vinylneononanoat-Gehalt: 5,6 Gew.-%; $V_{140}$: 100 mPa.s) |

Tabelle 2

| Kennzeichnung der Pfropfpolymerisate | | | | | | |
|---|---|---|---|---|---|---|
| Beispiel Nr. | VA-Gehalt (Gew.-%) | VEOVA Gehalt (Gew.-%) | MFI (g/10min) | V140 (mPa.s) | Mn (g/mol) | K-Wert |
| 1 | 22,8 | - | | 270 | - | - |
| 2 | 20,5 | - | | 375 | - | 19,0 |
| 3 | 22,1 | - | 1.120 | - | - | - |
| 4 | 29,1 | - | | 145 | 3.162 | 19,0 |
| 5 | 30,5 | - | | 123 | 2.808 | 19,4 |
| 6 | 29,3 | - | | 130 | 2.731 | 19,5 |
| 7 | 30,9 | - | | 95 | - | 19,6 |
| 8 | 28,9 | - | | 120 | - | 19,2 |
| 9 | 29,5 | - | | 134 | - | 19,6 |
| 10 | 30,1 | - | | 101 | - | 19,4 |
| 11 | 29,1 | - | | 125 | - | 18,9 |
| 12 | 29,9 | - | | 129 | - | 19,1 |
| 13 | 26,9 | 5,1 | | 95 | - | 19,3 |

## B) Wirksamkeit der erfindungsgemäßen Pfropfpolymerisate

Zur Prüfung der Wirksamkeit der erfindungsgemäßen Pfropfpolymerisate werden ein Rückstandsöl und 7 Mitteldestillate eingesetzt, denen die Pfropfpolymerisate als 50 Gew.-%ige Dispersion in Kerosin zugesetzt werden. Die eingesetzten Prüföle sind in Tabelle 3 zusammengestellt.

Tabelle 3

| Prüföle | |
|---|---|
| MD 1 | Rückstandsöl Masut aus Rußland |
| MD 2 | VEBA Heizöl EL/Scholven Nr. 51 |
| MD 3 | VEBA-Heizöl EL/Scholven Nr. 50 |
| MD 4 | VEBA-Heizöl EL/Horst Nr. 113 |
| MD 5 | Total Mitteldestillat Typ 7542 |
| MD 6 | VEBA Dieselkraftstoff Nr. 3 |
| MD 7 | Raw Diesel |
| MD 8 | VEBA Dieselkraftstoff/Horst |

In Tabelle 4, Beispiel 15 ist die Wirksamkeit des nach Beispiel 3 erhaltenen Pfropfpolymerisats als Pour-Point-Erniedriger (PPD-Wirkung) im Vergleich zu einem ungepfropften Ethylenmischpolymerisat (Polymerisat 3) gegenübergestellt (Beispiel 14).

Tabelle 4

| PPD-Wirkung der Pfropfpolymerisate (°C) | | |
|---|---|---|
| Beispiel Nr. | Polymerisat | MD 1 (+3,3)* 300 ppm |
| 14 | Polymerisat 3 | -18,8 |
| 15 | Pfropfpolymerisat gemäß Beispiel 3 | -21,7 |
| * Basis-Pour-Point | | |

In Tabelle 5 wird die Wirksamkeit der nach den Herstellungsbeispielen 1 bis 13 erhaltenen Pfropfpolymerisate als Fließverbesserer (CFPP-Wirkung) beschrieben (Beispiele 20 bis 31) im Vergleich zu den ungepfropften Ethylenmischpolymerisaten Polymerisate 1, 2, 4 und 5 (Beispiele 16 bis 19).

<u>Tabelle 5:</u> CFPP-Wirkung der Pfropfpolymerisate (°C)

| Bei-spiel Nr. | Polymerisat | MD 2 (±0)* 200 ppm | 400 | MD 3 (+1)* 200 ppm | MD 4 (+1)* 200 ppm | 400 | MD 5 (+3)* 500 ppm | MD 6 (−11)* 200 ppm | MD 7 (−10)* 200 ppm | MD 8 (−10)* 400 ppm |
|---|---|---|---|---|---|---|---|---|---|---|
| 16 | 1 | − 3 | − 4 | ± 0 | ± 0 | − 1 | − | − | − | − |
| 17 | 2 | − 5 | − 7 | − 1 | − 2 | − 1 | − | − | − | − |
| 18 | 4 | − | − | − | − | − | + 1 | −23 | −27 | −21 |
| 19 | 5 | − | − | − | − | − | − | − | −20 | −16 |
| Pfropfpoly-merisat nach Beispiel: | | | | | | | | | | |
| 20 | 1 | −13 | −15 | −15 | −17 | −17 | − | − | − | − |
| 21 | 2 | −10 | −15 | − 1 | − 4 | −13 | − | − | − | − |
| 22 | 4 | − | − | − | − | − | + 1 | −26 | − | −17 |
| 23 | 5 | − | − | − | − | − | − 1 | −27 | − | −14 |
| 24 | 6 | − | − | − | − | − | − 2 | −26 | − | −15 |
| 25 | 7 | − | − | − | − | − | − | − | −28 | −18 |
| 26 | 8 | − | − | − | − | − | − | − | −23 | −25 |
| 27 | 9 | − | − | − | − | − | − | − | −29 | −26 |
| 28 | 10 | − | − | − | − | − | − | − | −24 | −27 |
| 29 | 11 | − | − | − | − | − | − | − | −26 | −27 |
| 30 | 12 | − | − | − | − | − | − | − | −23 | −29 |
| 31 | 13 | − | − | − | − | − | − | − | −20 | −27 |

\* Basis-CFPP-Wert ohne Additiv

Der Vergleich zeigt, daß die erfindungsgemäßen Pfropfpolymerisate eine gegenüber den Basispolymerisaten verbesserte Wirksamkeit aufweisen.

C) Filtrierbarkeit der Pfropfpolymerisate

In Tabelle 6 ist das Filtrierverhalten der neuen Pfropfpolymerisate dem Filtrierverhalten der ungepfropften Basispolymerisate gegenübergestellt (Beispiele 32 bis 43). Die Prüfung erfolgt nach dem British Rail-Filtrationstest, dessen Durchführung nachstehend beschrieben ist:

400 ppm einer Dispersion des Polymerisats bzw. Pfropfpolmyerisats in Kerosin (50 Gew.-% Polymerisat, bezogen auf die Dispersion) werden bei 20°C zu 200 ml des entsprechenden Prüföls dosiert. Die Ölprobe wird 30 Sekunden von Hand kräftig geschüttelt und 24 Stunden bei +3°C gelagert. Anschließend wird eine 50 ml Probe in eine auf +3°C gekühlte Testbürette gefüllt und unter dem eigenen hydrostatischen Druck über eine mit einem Whatman-Glasmicrofiberfilter (Typ GFA, Durchmesser 2,5 cm) ausgerüstete Filtereinheit entleert. Dabei wird die Auslaufzeit für 50 ml Ölvolumen gemessen ($T_1$). Dieser Vorgang wird ohne Filterwechsel noch zweimal wiederholt (Bestimmung von $T_2$ und $T_3$). Aus den so bestimmten Filtrationszeiten wird als Maßzahl für die Filtrierbarkeit die sogenannte Average Differential Time (ADT) nach folgender Formel berechnet:

$$ADT = \frac{0,5 \cdot (T_3 - T_1)}{T_2} \cdot 100$$

Niedrige ADT-Werte entsprechen einer guten Filtrierbarkeit.

Tabelle 6

| ADT-Werte der Pfropfpolymerisate | | | | |
|---|---|---|---|---|
| Beispiel Nr. | Polymerisat | MD 6 (3,5)* | MD 7 (0,0)* | MD 8 (0,5)* |
| 32 | 4 | 35,0 | 28,5 | 65,5 |
| 33 | 5 | - | 21,0 | 45,0 |
| | Pfropfpolymerisat nach Beispiel | | | |
| 34 | 4 | 8,5 | - | 8,5 |
| 35 | 5 | 10,2 | - | 10,2 |
| 36 | 6 | 4,9 | - | 4,9 |
| 37 | 7 | - | 8,0 | 8,8 |
| 38 | 8 | - | 8,3 | 37,6 |
| 39 | 9 | - | 10,9 | 14,7 |
| 40 | 10 | - | 7,9 | 29,0 |
| 41 | 11 | - | 13,2 | 18,0 |
| 42 | 12 | - | 8,2 | 35,0 |
| 43 | 13 | - | 5,4 | 7,1 |

* Basis-ADT-Wert ohne Additiv

Die Ergebnisse der Beispiele zeigen, daß die erfindungsgemäßen Pfropfpolymerisate gegenüber den Basispolymerisaten eine deutlich verbesserte Filtrierbarkeit aufweisen.

**Patentansprüche**

1. Pfropfpolymerisate aus 20 bis 99,9 Gew.-% eines Ethylenmischpolymerisats und 0,1 bis 80 Gew.-% einer Pfropfkomponente, wobei das Ethylenmischpolymerisat 30 bis 95 Gew.-% Ethylen und 5 bis 70 Gew.-% Vinylester gesättigter aliphatischer $C_2$- bis $C_{18}$-Monocarbonsäuren oder 4 bis 50 Gew.-% Vinylester gesättigter aliphatischer $C_2$- bis $C_{18}$-Monocarbonsäuren und 1 bis 20 Gew.-% lineare oder verzweigte $C_3$- bis $C_{18}$-Monoolefine enthält und die Pfropfkomponente N-substituierte alpha, beta-ungesättigte Dicarbonsäureimide und/oder Dicarbonsäureamide und/oder Dicarbonsäurehalbamide und/oder Ammoniumsalze der Halbamide sind.

2. Pfropfpolymerisate nach Anspruch 1 aus 50 bis 99 Gew.-% eines Ethylenmischpolymerisats und 1 bis 50 Gew.-% einer Pfropfkomponente.

3. Pfropfpolymerisate nach Anspruch 1 oder 2 dadurch gekennzeichnet, daß das Ethylenmischpolymerisat 50 bis 80 Gew.-% Ethylen und 20 bis 50 Gew.-% Vinylester gesättigter aliphatischer $C_2$- bis $C_{18}$-Monocarbonsäuren oder 15 bis 35 Gew.-% gesättigter aliphatischer $C_2$- bis $C_{18}$-Monocarbonsäuren und 5 bis 15 Gew.-% lineare oder verzweigte $C_3$- bis $C_{18}$-Monoolefine enthält.

4. Pfropfpolymerisate nach Anspruch 1 oder 2 dadurch gekennzeichnet, daß das Ethylenmischpolymerisat Vinylester gesättigter $C_1$- bis $C_{12}$-Monocarbonsäuren, insbesondere der Essigsäure oder von $C_5$- bis $C_{10}$-Neocarbonsäuren enthält.

5. Pfropfpolymerisate nach Anspruch 1 oder 2 dadurch gekennzeichnet, daß das Ethylenmischpolymerisat ein Ethylen-/Vinylacetat-Copolymerisat mit einem Gehalt 5 bis 50, vorzugsweise 20 bis 40 Gew.-% Vinylacetat ist.

6. Pfropfpolymerisate nach Anspruch 1 oder 2 dadurch gekennzeichnet, daß das Ethylenmischpolymerisat ein Ethylen-/Vinylacetat-/Vinylneononanoat- oder Vinylneodecanoat-Terpolymerisat ist.

7. Pfropfpolymerisate nach Anspruch 6 dadurch gekennzeichnet, daß das Ethylen-/Vinylacetat-/Vinylneononanoat- oder Vinylneodecanoat-Terpolymerisat 5 bis 50, vorzugsweise 20 bis 35 Gew.-% Vinylacetat und 1 bis 20, vorzugsweise 5 bis 15 Gew.-% des Vinylesters einer $C_5$-bis $C_{10}$-Neocarbonsäure, insbesondere Vinylneononanoat oder Vinylneodecanoat enthält.

8. Pfropfpolymerisate nach Anspruch 1 oder 2 dadurch gekennzeichnet, daß das Ethylenmischpolymerisat ein Ethylen-/Vinylacetat-/Diisobutylen-Terpolymerisat ist.

9. Pfropfpolymerisate nach Anspruch 8 dadurch gekennzeichnet, daß das Ethylen-/Vinylacetat-/Diisobutylen-Terpolymerisat 4 bis 50, vorzugsweise 20 bis 35 Gew.-% Vinylacetat und 1 bis 20, vorzugsweise 5 bis 15 Gew.-% Diisobutylen enthält.

10. Pfropfpolymerisate nach einem oder mehreren der Ansprüche 1 bis 9 dadurch gekennzeichnet, daß die mittlere Molekularmasse der Ethylenmischpolymerisate 500 bis 30.000 vorzugsweise 8.000 bis 30.000 g/mol beträgt.

11. Pfropfpolymerisate nach einem oder mehreren der Ansprüche 1 bis 10, dadurch gekennzeichnet, daß ihre bei 140°C gemessene Schmelzviskosität 50 bis 500 mPa*s beträgt.

12. Pfropfpolymerisate nach einem oder mehreren der Ansprüche 1 bis 10, dadurch gekennzeichnet, daß ihr bei 190 °C und 2,16 kg Auflagegewicht gemessene Schmelzindex 50 bis 5.000 g/10 Minuten beträgt.

13. Pfropfpolymerisate nach Anspruch 1 oder 2 dadurch gekennzeichnet, daß die Pfropfkomponente N-mono- oder -disubstituierte Imide, Amide, Halbamide oder Ammoniumsalze der Halbamide der Malein- oder Fumarsäure sind.

14. Pfropfpolymerisate nach einem oder mehreren der Ansprüche 1,2 oder 13 dadurch gekennzeichnet, daß die Pfropfkomponenten N-Mono- oder -Dialkyl-, N-Mono oder -Dicycloalkyl-, N-Mono- oder -Diaryl-, N-Alkyl-Arylsubstituierte Imide, Amide, Halbamide oder Ammoniumsalze der Halbamide der Maleinsäure oder Fumarsäure sind.

15. Pfropfpolymerisate nach Anspruch 13 oder 14 dadurch gekennzeichnet, daß die Pfropfkomponente ein n-$C_6$- bis n-$C_{24}$-Alkylmaleinsäureimid ist.

16. Verfahren zur Herstellung von Pfropfpolymerisaten nach einem oder mehreren der Ansprüche 1 bis 5 dadurch gekennzeichnet, daß man Ethylenmischpolymerisat und Pfropfkomponente in Gegenwart eines Radikalinitiators bei 30 bis 200°C in Schutzgasatmosphäre umsetzt.

17. Verwendung von Pfropfpolymerisaten nach einem oder mehreren der Ansprüche 1 bis 15 zur Verbesserung der Fließfähigkeit paraffinhaltiger Mineralöle und Mineralöldestillate.

18. Mineralöle und Mineralöldestillate mit einem Gehalt von 0,001 bis 2 Gew.-% (bezogen auf das Öl oder Öldestillat) an Pfropfpolymerisaten nach einem oder mehreren der Ansprüche 1 bis 15.